# EUROPEAN PATENT APPLICATION

(11) **EP 2 560 068 A1**
(43) Date of publication of application: **20.02.2013**
(21) Application number: 11177635.7
(22) Date of filing: 16.08.2011
(51) Int. Cl.: G06F 1/16, H04M 1/02

(54) **Apparatus and methods for moving an input interface relative to a display of an electronic device**

(71) Applicant: Research In Motion Limited, Waterloo, ON N2L 3W8 (CA)
(72) Inventor: Pegg, Albert Murray, Waterloo, Ontario N2L 3W8 (CA)
(74) Representative: Hibbert, Juliet Jane Grace

(57) **Abstract**

Electronic devices having a swivel input interface are described herein. An example electronic device includes a display and an input interface being pivotably coupled relative to the display about a swivel axis. The input interface is to pivot between a first position to provide a first viewing area of the display and a second position to provide a second viewing area of the display. The input interface has a first surface to provide an input area and a second surface opposite the input area. The second surface is oriented toward the display when the input interface pivots relative to the display between the first and second positions and the input interface extends over the swivel axis such that the swivel axis intersects the input area.

## Description

### FIELD OF DISCLOSURE

The present disclosure relates to electronic devices, including but not limited to, apparatus and methods for moving an input interface relative to a display of an electronic device.

### BACKGROUND

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touch-screen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

In addition to the touch-sensitive display, some electronic devices often include an input interface (e.g., a keypad) to input commands or information to the electronic device. In some examples, the input interface or keypad pivots, flips or slides relative to the touch-sensitive display. As a result, a user can typically only access the input interface when the input interface is in one state relative to the display. For example, an input interface (e.g., a keypad) can pivot relative to a display of an electronic device between an open position at which the input interface is accessible and a closed position at which the input interface is not accessible. Thus, in the closed position, a user cannot access the input interface and, instead, can only interact with the electronic device via the touch-sensitive display.

### BRIEF DESCRIPTION OF THE DRAWINGS

FIG. 1 is a block diagram of an electronic device in accordance with the disclosure.

FIG. 2A is a perspective view of the example electronic device of FIG. 1 shown in a first position.

FIG. 2B is a front view of the example electronic device of FIG. 2A.

FIG. 2C is a side view of the example electronic device of FIG. 2B.

FIG. 3A is a perspective view of the example electronic device of FIG. 1 shown in a second position.

FIG. 3B is a front view of the example electronic device of FIG. 3A.

FIG. 3C is a side view of the example electronic device of FIG. 3B.

FIG. 4 is an exploded view of the example electronic device of FIG. 1, FIGS. 2A-2C and FIGS. 3A-3C.

FIG. 5. shows an input device of the example electronic device swiveling relative to a display of the electronic device.

FIG. 6 shows the electronic device of FIG. 1 and FIGS. 2A-2C in a landscape orientation and the input interface in a first user mode.

FIG. 7 shows the electronic device of FIG. 1 and FIGS. 3A-3C in a landscape orientation and the input interface in a second user mode.

### DETAILED DESCRIPTION

The disclosure generally relates to electronic devices such as, for example, a portable electronic device in the examples described herein. Examples of portable electronic devices include mobile, or handheld, wireless communication devices such as pagers, cellular phones, cellular smart-phones, wireless organizers, personal digital assistants, wirelessly enabled notebook computers, tablet computers and so forth. The portable electronic device may also be a portable electronic device without wireless communication capabilities, such as a handheld electronic game device, digital photograph album, digital camera, or other device.

In general, an example electronic device described herein provides a low-profile, compact or smaller viewing area when the electronic device is in a first physical state or position (e.g., a closed position) and an expanded or larger viewing area when the electronic device is in a second physical state or position (e.g., an open position). As a result, the electronic devices described herein provide a low-profile, compact electronic device having a compact viewing area when the electronic device is in the first position (e.g., a compact state) while having the capability to expand and provide a larger viewing area when the electronic device is in the second position (e.g., an expanded state).

To provide the compact and expanded states, the example electronic devices described herein employ a movable input interface or input area. The input interface swivels or pivots relative to a display between a first user mode position and a second user mode position that corresponds to the respective compact and expanded positions of the electronic device. Unlike known electronic devices that utilize a movable input interface (e.g., a slider phone, a flip phone, etc.) that is only accessible for use when the electronic device is in only one position (e.g., an open position), the input interface of the example electronic devices described herein is accessible for use when the electronic device is in an open condition or position and a closed position or condition.

For example, the input interface includes an input area on a first surface of the input interface and a second surface opposite the first surface. A pivot mount is disposed between the second surface of the input interface and a housing of the display. In other words, the second surface of the input interface is oriented toward the display and is oriented toward the display as the input interface pivots between the first and second positions. Additionally, unlike many known devices, the input area of the input interface is disposed or extends over at least a portion of the pivot mount to maximize a surface area of the input area.

In some examples, the input interface may include physical keys (e.g., depressible keys, plastic keys, etc.) and in other examples the input interface may include a touch screen display that may present an image of keys (e.g., numerical, alphanumerical, control keys, etc.) to a user. In either case, the assigned functionality of the input interface when in the first user mode and the assigned functionality of the input interface when in the second user mode may be adjusted such that a user input(s) (e.g., characters, numerals, etc.) available in the first user mode may be different (e.g., have their functionality reassigned, reoriented, flipped and/or otherwise adjusted) when the electronic device moves between the first and second user modes. With physical keys, this may be achieved by having multiple functions assigned to (and, in some cases, visible on) each key. For example, the input interface may include a morphing keypad that presents a QWERTY key set when the input interface is in the first user mode and presents a SureType key set when the input interface is in a second user mode.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the examples described. The description is not to be considered as limited to the scope of the examples described herein.

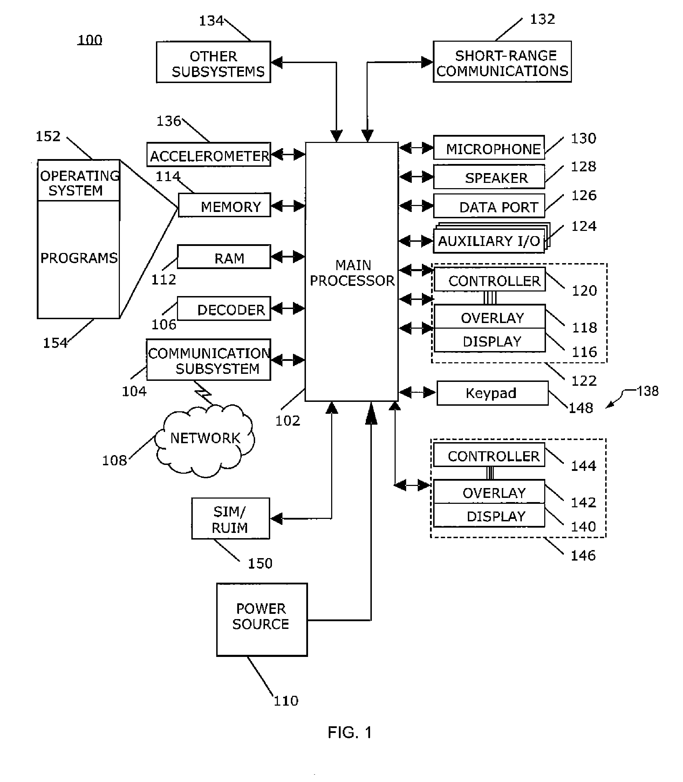

A block diagram of an example portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 108. The wireless network 108 may be any type of wireless network, including, but not limited to, data wireless networks, voice wireless networks, and networks that support both voice and data communications. A power source 110, such as one or more rechargeable batteries or a port to an external power supply, powers the portable electronic device 100.

The processor 102 interacts with other components, such as Random Access Memory (RAM) 112, memory 114, a display 116 with a touch-sensitive overlay 118 operably connected to an electronic controller 120 that together comprise a first touch-sensitive display 122, an auxiliary input/output (I/O) subsystem 124, a data port 126, a speaker 128, a microphone 130, short-range communications 132, and other device subsystems 134. In this example, user-interaction with a graphical user interface is performed through the touch-sensitive overlay 118. The processor 102 interacts with the touch-sensitive overlay 118 via the electronic controller 120. Information, such as text, characters, symbols, images, icons, and other items that may be displayed or rendered on a portable electronic device, is displayed on the touch-sensitive display 122 via the processor 102. The processor 102 may interact with an accelerometer 136 that may be utilized to detect direction of gravitational forces or gravity-induced reaction forces.

Additionally, the processor 102 interacts with an input device or input interface 138. The input device or input interface 138 may be, for example, a second display 140 with a touch-sensitive overlay 142 operably connected to the electronic controller 144 that together comprise a second touch-sensitive display 146. User-interaction with a graphical user interface may be performed through the second touch-sensitive overlay 146. The processor 102 interacts with the touch-sensitive overlay 142 via the electronic controller 144. Information, such as text, characters, symbols, images, icons, and other items that may be displayed or rendered on a portable electronic device, is displayed on the touch-sensitive display 146 via the processor 102. Alternatively, the input device or interface 138 may be a keypad 148 such as, for example, a dome-switch keypad, an electronic keypad, a morphing keypad or any other suitable keypad as described in greater detail below.

To identify a subscriber for network access, the portable electronic device 100 uses a Subscriber Identity Module or a Removable User Identity Module (SIM/RUIM) card 150 for communication with a network, such as the wireless network 108. Alternatively, user identification information may be programmed into memory 114.

The portable electronic device 100 includes an operating system 152 and software programs or components 154 that are executed by the processor 102 and are typically stored in a persistent, updatable store such as the memory 114. Additional applications or programs may be loaded onto the portable electronic device 100 through the wireless network 108, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 116 and/or to the auxiliary I/O subsystem 124. A subscriber may generate data items, for example e-mail messages, which may be transmitted over the wireless network 108 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive displays 122 and/or 146 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay. The overlay may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

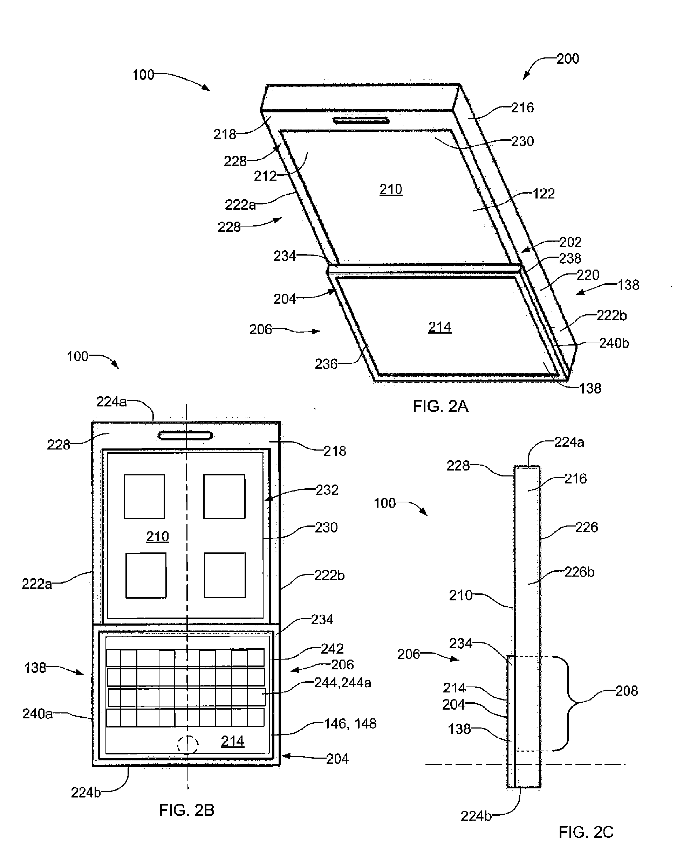

FIG. 2A is a perspective view of an example mobile electronic device 100 of FIG. 1 shown in a first physical state 200 such as a closed position. FIG. 2B is a front view of the example electronic device 100 shown in FIG. 2A. FIG. 2C is a side view of the example electronic device 100 shown in FIG. 2A and FIG. 2B.

In one example, the portable electronic device 100 is a handheld communication device or a mobile device such as a mobile phone. As mentioned above, the electronic device 100 may be a data and/or voice-enabled handheld device that may be used to send and receive a message, a voice communication, a textual entry, etc. Thus, the electronic device 100 may provide a variety of functions including, for example, telephonic, electronic messaging, and other personal information manager (PIM) application functions.

Referring to FIGS. 2A-2C, the electronic device 100 includes a first portion 202 to support the touch-screen display 122 that is coupled to a second portion 204 to support the input interface 138. As most clearly shown in FIG. 2B, when the electronic device 100 is in the closed position 200, the input interface 138 is in a first user mode or position 206 such that the second portion 204 is positioned generally partially over the first portion 202 of the electronic device 100. In particular, the input interface 138 is substantially aligned with the display 122 to cover at least a portion 208 (FIG. 2C) of the touch-screen display 122 to provide a first viewing area 210 of the touch screen display 122 when the electronic device 100 is in the closed position 200 as shown in FIGS. 2A-2C. In other words, a smaller, more compact viewing area 210 is visible to a user when the input interface 138 is in the first user mode or position 206. Thus, the viewing area 210 is defined by an area 212 of the touch screen display 122 that is visible to a user when the electronic device 100 is in the first position 200. In some examples, the viewing area 210 may also include an input area 214 defined by the input interface 138.

In the first user mode position 206, a user may have access to, and/or interact with the electronic device 100 via the area 212 of the touch-screen display 122 and the user input area 214 defined by the input interface 138. For example, the area 212 of the display 122 may present graphical displays and the input area 214 of the input interface 138 may present a numerical key set, a QWERTY key set, a SureType key set, and/or any other suitable key sets or input controls such as multimedia input key sets having functions to control media content or a media application. In yet some examples, the input interface 138 effectively expands the touch-screen display 122 such that an image or graphical representation (e.g., a website) is transposed across both the area 212 of the touch-screen display 122 and the area 214 of the input interface 138.

The first portion 202 of the electronic device 100 includes a first housing 216 that encloses the electronic or mobile components described above in connection with FIG. 1. For example, the first housing 216 encloses the microprocessor 102, the speaker 128, the microphone 130, the accelerometer 136, etc. The first housing 216 of the illustrated example can be held in one hand by a user of the electronic device 100 during data (e.g., text) and/or voice communications.

The first housing 216 of the electronic device 100 includes an upper housing portion or lid 218 and a lower housing portion or base 220. The base 220 includes lateral sides 222a, 222b, top and bottom sides 224a, 224b and a rear or back side 226 (FIG. 2C). The lid 218 retains the touch-screen display 122 within the base 220 such that the lid 218 and the touch-screen display 122 define a front side 228 of the housing 216.

To enable a user to interact with the electronic device 100, the electronic device 100 includes a graphical user interface 230 (GUI) controlled by, for example, the operating system 152 (FIG. 1). Generally, the GUI 230 is used to convey information and/or receive commands or information from a user, and includes a variety of GUI objects or controls that include, for example, apps, icons, toolbars, drop-down menus, pop-up menus, text, dialog boxes, buttons, etc. The GUI 230 provides a window 232 in which a user may view a menu item (i.e., an icon), an application (e.g., an app) and/or a document. For example, a user can interact with the GUI 230 via the touch-screen display 122.

In the illustrated example, the second portion 204 of the electronic device 100 is a second housing 234 that receives or houses the input interface or input device 138. The second housing 234 includes a lid 236 that couples to a base 238 to capture or restrain the input interface 138 within the base 238. In particular, lateral sides 240a, 240b of the second housing 234 and/or the input interface 138 are substantially aligned with the respective lateral sides 222a, 222b of the housing 216 and/or the touch screen display 122. For example, when the electronic device 100 is in a portrait orientation as shown in FIGS. 2A-2C, the touch-screen display 122 provides a portrait orientation and the input interface 138 provides a landscape orientation. As shown, the input interface 138 has a width substantially similar or equal to a width of the touch-screen display 122 when the input interface 138 is in the landscape orientation and the touch-screen display 122 is in the portrait orientation.

In some examples, the input interface 138 may be the touch-screen display 146. Additionally, the touch-screen display 146 may provide a second graphical user interface 242 (GUI) controlled by, for example, the operating system 152 (FIG. 1). For example, the touch-screen display 146 may present an image of keys or characters 244 (e.g., alphanumerical, numerical, etc.) to a user of the electronic device 100. Alternatively, the input interface 138 may include the physical keypad 148 that presents keys or characters 244a. For example, the keypad 148 may be a dome-switch keypad or any other suitable keypad and may present a QWERTY style key set, a SureType style key set and/or any other suitable key set or control key sets as described below.

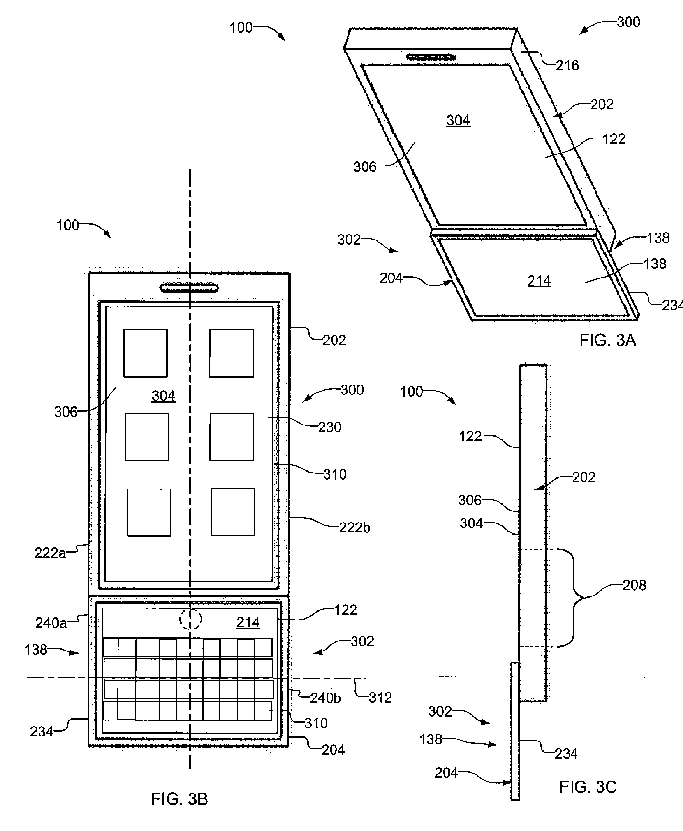

FIG. 3A is a perspective view of the example electronic device 100 of FIG. 1 shown in a second physical state 300 such as an open position. FIG. 3B is a front view of the example electronic device 100 of FIG. 3A. FIG. 3C is a side view of the example electronic device 100 of FIG. 3A and FIG. 3B.

As most clearly shown in FIG. 3B, when the electronic device 100 is in the open position 300, the second portion 204 is positioned away from the first portion 202 of the electronic device 100 to a second user mode or position 302. In the second user mode 302, the input interface 138 uncovers or exposes the portion 208 (FIG. 3C) of the touch-screen display 122 to provide a second viewing area 304 of the touch-screen display 122. In other words, a larger viewing area 304 is visible to a user of the electronic device 100 when the input interface 138 is in the second user mode 302. The viewing area 304 is defined by an exposed area 306 of the touch-screen display 122. In some examples, the viewing area 304 may also be defined by the input area 214 of the input interface 138. In the second user mode 302, a user of the electronic device 100 may have access to and/or interact with the electronic device 100 via the area 306 of the touch-screen display 122 and the input area 214 defined by the input interface 138.

In the second user mode 302, the lateral sides 240a, 240b of the housing 234 and/or the input interface 138 are substantially aligned with the respective lateral sides 222a, 222b of the first housing 216 and/or the touch-screen display 122. For example, when the electronic device 100 is in a portrait orientation as shown in FIGS. 3A-3C, the touch-screen display 122 provides a portrait orientation and the user interface 138 provides a landscape orientation. As shown, the input interface 138 has a width substantially similar to the width of the touch-screen display 122 when the input interface 138 is in the second position 302.

When the input interface 138 is positioned to the second user mode 302, the graphical user interface 230 (GUI) adjusts, expands or otherwise provides a window 310 in which a user may view a menu item (i.e., an icon), an application (e.g., an app), a document, etc. For example, the area 306 may present graphical displays, applications, etc., and the input area 214 may present a numerical key set, a QWERTY key set, a SureType key set, and/or any other suitable key sets or input controls such as multimedia input keys each having a function to control media content or a media application.

As noted above, the input interface 138 may be the touch-screen display 146 or, alternatively, may be physical keys provided by the keypad 148 (e.g., a dome-switch keypad). For example, the touch-screen display 146 may present one or more characters 244 to enable a user to input information and/or command the electronic device 100. Whether the input interface 138 is the touch-screen display 146 or the keypad 148, the assigned functionality of the input area 214 in the first user mode 206 and the assigned functionality of the input area 214 in the second user mode 302 may be adjusted such that the user input(s) available in the first user mode 206 may have their functionality reassigned or adjusted when the input interface 138 swivels between the first and second user modes 206 and 302. For example, referring to FIGS. 2B, the input interface 214 may present one or more characters or control inputs 244, 244a (e.g., a QWERTY type keypad, either virtual or physical keys). However, referring to FIG. 3B, when the input interface 138 is swiveled between the first user mode 206 and the second user mode 302, the input interface 138 changes or reverses orientation to provide one or more characters or control inputs 310. In the second user mode 302, the input interface 138 is capable of reorienting the one or more characters or controls 244, 244a to the orientation of the one or more characters or controls 310. For example, the touch-screen display 146 flips (or provides a mirror image of) a virtual QWERTY key set about a horizontal axis 312.

With physical keys (e.g., plastic keys, depressible keys, etc.), for example, this may be achieved by having multiple functions assigned to (and, in some cases, visible on) each key. For example, the physical keypad may be a morphing keypad that presents or appears as a standard alphanumeric keypad when a phone application of the electronic device 100 is activated, morphs to present or appear as a music control keypad when a multimedia application of the electronic device is activated, morphs to present or appear as a camera function key set like zoom and video when a camera application of the electronic device is activated, etc. The physical keypad may be configured to reorient or flip the physical keys when the input interface 138 swivels between the first and second user modes 206 and 302. Thus, each key of the keypad 148 may be assigned dual function. For example, a key of a keypad represents the character "T" in a QWERTY key set when the input interface 138 is in the first user mode 206 and the same key represents the character "B" in a QWERTY key set when the input interface 138 is in the second user mode 302.

In some examples, the input interface 138 uncovers or exposes the portion 208 of the touch-screen display 122 to effectively expand a user viewing area such that an image or graphical representation (e.g., a website) is transposed across both the area 306 of the touch-screen display 122 and the input area 214 of the input interface 138.

Thus, in general, the input interface 138 moves or swivels relative to the touch-screen display 122 between the first user mode 206 to provide the first viewing area 210 and the second user mode 302 to provide the second viewing area 304, where the first viewing area 210 is smaller than the second viewing area 304. Additionally, the input interface 138 is accessible to a user when the input interface 138 is in either the first user mode 206 or the second user mode 302.

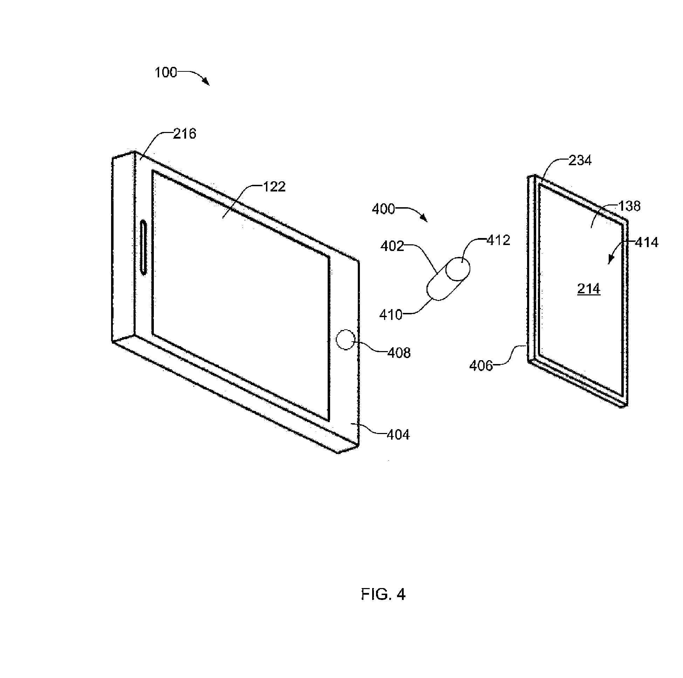

FIG. 4 is an exploded view of the example electronic device 100 of FIG. 1, FIGS. 2A-2C, and FIGS. 3A-3C. To movably couple the input interface 138 relative to the touch-screen display 122, the electronic device 100 employs a pivot mount or pivot apparatus 400. In particular, the pivot apparatus 400 of the illustrated example is a pivot pin 402, which enables the input interface 138 to move, swivel or pivot relative to the touch-screen display 122. The pivot pin 402 is disposed between a side 404 of the housing 216 and a side or surface 406 of the user interface 138 opposite the input area 214. The housing 216 includes an opening 408 to receive a first end 410 of the pivot pin 402 and the housing 234 or surface 406 includes an opening or recess (not shown) to receive a second end 412 of the pivot pin 402. Additionally, the pivot mount 400 does not extend through the housing 234. In other words, the input area 214 of the input interface 138 is disposed over at least a portion of the pivot mount 400 to maximize a surface area 414 of the input interface 138 and, thus, the input area 214. Thus, the input area 214 substantially covers, hides, conceals, overlaps or otherwise extends over at least a portion of the pivot mount 400.

Although not shown, the pivot apparatus 400, the housing 216 and/or the housing 234 may include a first position stop and a second position stop to limit pivotal or swivel movement of the input interface 138 relative to the housing 216 between the respective first and second user modes 206 and 302. For example, the stops may limit the rotational, swivel or pivotal range of the input interface 138 relative to the touch-screen display 122 through approximately 180 degrees.

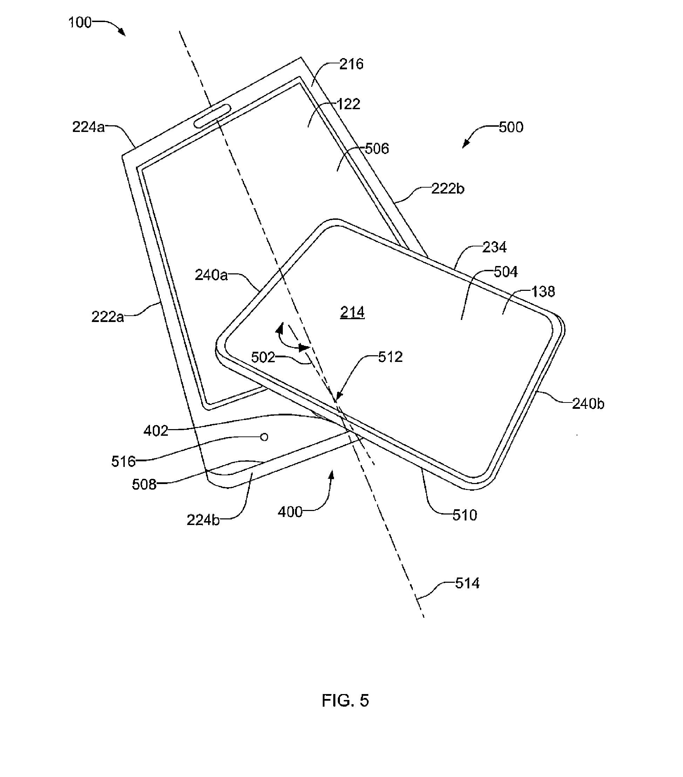

FIG. 5 illustrates the electronic device 100 of FIG. 1, FIGS. 2A-2C, and FIGS. 3A-3C in an intermediate state 500 between the closed and open positions 200 and 300. As shown in FIG. 5, the input interface 138 swivels relative to the touch-screen display 122 about a pivot or swivel axis 502 defined by the pivot pin 402. The pivot pin 402 enables the input interface 138 to swivel relative to the housing 216 about the swivel axis 502 between the first user mode 206 to cover the portion 208 of the touch-screen display 122 and the second user mode 302 to expose the portion 208 of the touch-screen display 122. The input interface 138 extends over at least a portion of the swivel axis 502 such that the swivel axis 502 intersects or is substantially perpendicular to the input area 214. As shown in FIG. 5, the input interface 138 is coupled to the housing 216 such that a face 504 and/or the input area 214 of the user interface 138 is oriented substantially similar or parallel relative to a face 506 of the touch-screen display 122 when the input interface 138 pivots or swivels between the first and second user modes 206 and 302. In other words, the surface 406 of the input interface 138 is oriented toward the surface 404 of the housing 216 when the input interface 138 pivots relative to the display between the first and second positions 206 and 302. Thus, the input area 214 is oriented relative to the face 506 of the touch-screen display 122 such that the input area 214 of the input interface 138 is user accessible when the input interface 138 is in the first user mode 206 and the second user mode 302.

As shown in FIG. 5, the pivot pin 402 is positioned adjacent an edge 508 of the housing 216 and an edge 510 of the housing 234 and approximately at a midpoint 512 between respective lateral edges 222a, 222b of the housing 216 and the lateral edges 240a, 240b of the housing 234. In this example, the edges 508 and 510 are substantially perpendicular relative to the respective lateral edges 222a, 222b, 240a and 240b. In other words, the pivot pin 402 is aligned substantially along a longitudinal axis 514 of the housing 216. As shown, the longitudinal axis 514 extends between the top side 224a of the housing 216 and the bottom side 224b of the housing 216 and passes through the midpoint 512 between the first and second lateral sides 222a, 222b of the housing 216.

The electronic device 100 includes a sensor or switch 516 that provides a signal to the processor 102 to detect the physical state of the electronic device 100 (e.g., when the electronic device 100 is in the closed position 200 or the open position 300). For example, the sensor 516 generates an open or close signal according to the position of the input interface 138 relative to the housing 216. The processor 102 processes the signal(s) received from the sensor 516 and determines if the input interface 138 is in the first user mode 206 or the second user mode 302. For example, the sensor or switch 516 may include, but is not limited to, a Hall sensor, an optical sensor, an electromagnetic switch, a contact switch, a mechanical switch, etc.

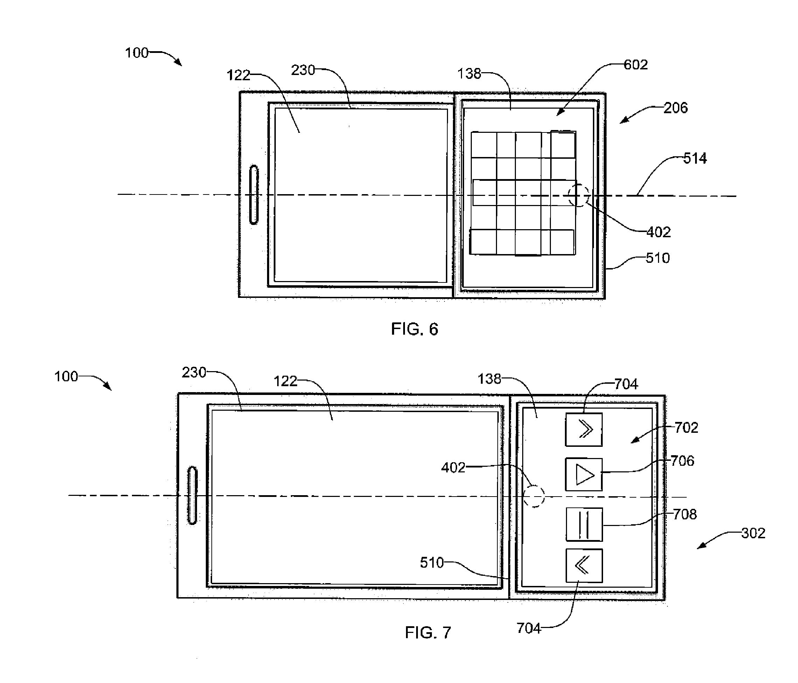

FIG. 6 illustrates the example electronic device 100 in a landscape orientation 600 when the input interface 138 is in the first user mode 206. As shown in FIG. 6, when the electronic device 100 is in the landscape orientation 600, the touch-screen display 122 presents a landscape orientation and the input interface 138 presents a portrait orientation. For example, in contrast to a QWERTY type key set presented when the input interface 138 is in the landscape orientation of FIGS. 2A-2C and 3A-3C, the input interface 138 shown in FIG. 6 may present a SureType key set 602 when the input interface 138 is in the portrait orientation of FIG. 6. As noted above, the input interface 138 may present different key sets regardless of whether the input interface 138 is the touch-screen display 146 or the physical keypad 148. Thus, when a user rotates the electronic device 100 to the landscape orientation of FIG. 6, the electronic device 100 may sense such a rotation via, for example, the accelerometer 136 and may command or control (e.g., the GFI of) the input interface 138 to display or present the SureType key set 602 and/or any other key set.

FIG. 7 illustrates the electronic device 100 in a landscape orientation and the input interface 138 in the second user mode 302. As shown in FIG. 7, in some examples, the GUI 230 of the touch-screen display 122 may present an application and the input interface 138 may present controls for the application. For example, the touch-screen display 122 may present a multimedia or music player application and the input interface 138 may present control keys 702 to control the media such as, for example, skip 704, play 706, pause 708, etc.

In some examples, the touch screen-display 122 may present a first application and the input interface 138 may present a second application. For example, the touch screen-display 122 may present an internet application to enable a user to surf the internet and the input interface 138 may present a multimedia or music player application to enable a user to play music, an email application, etc.

Thus, the example electronic device described herein provides a first viewing area in a first mode of operation to provide a compact electronic device, while providing a second viewing area larger than the first viewing area in a second mode of operation. Additionally, unlike known electronic devices, an input interface or input area is accessible to a user when the electronic device is in either the first mode of operation or the second mode of operation. Such a configuration enables a user to interact with the electronic device when the electronic device is in the first mode of operation (a compact mode) or the second mode of operation (an expanded mode). Further, the user interface may be configured to provide or present different key sets or configurations (e.g., morphing key sets) depending on an activated application of the electronic device 100.

The methods described herein may be carried out by software executed, for example, by the processor 102. Coding of software for carrying out such a method is within the scope of a person of ordinary skill in the art given the present description. A computer-readable medium having computer-readable code may be executed by at least one processor of the portable electronic device 100 to perform the methods described herein.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device comprising:
a display; and
an input interface being pivotably coupled relative to the display about a swivel axis, the input interface configured to pivot between a first position to provide a first viewing area of the display and a second position to provide a second viewing area of the display, the input interface having a first surface to provide an input area and a second surface opposite the input area, the second surface being oriented toward the display when the input interface pivots relative to the display between the first and second positions, and wherein the input interface extends over the swivel axis such that the swivel axis intersects the input area.

2. The electronic device of claim 1, wherein the input interface is to pivot relative to the display through approximately a 180 degree rotation.

3. The electronic device of claim 1, wherein the display provides a portrait orientation and the input interface provides a landscape orientation when the electronic device is in a first orientation and the input interface is in one of the first position and the second position.

4. The electronic device of claim 3, wherein when the input interface is in the landscape orientation, the input interface has a width that is substantially similar to a width of the display when the display is in the portrait orientation.

5. The electronic device of claim 1, wherein the display provides a landscape orientation and the input interface provides a portrait orientation when the electronic device is in a second orientation and the input interface is in one of the first position and the second position.

6. The electronic device of claim 1, wherein the input interface comprises a touch-screen display, or
wherein the input interface comprises a keypad, and preferably wherein the display is another touch-sensitive display.

7. The electronic device of claim 6, wherein the keypad comprises a dome-switch type keypad.

8. The electronic device of claim 1, further comprising a pivot pin to pivotably couple the input interface relative to the display, wherein the input area is positioned over at least a portion of the pivot pin.

9. The electronic device of claim 8, wherein the pivot pin is positioned adjacent a first edge of the display and a second edge of the user interface and approximately at a midpoint between lateral edges of the display and the input interface, the lateral edges being substantially perpendicular to the first and second edges.

10. A mobile device comprising:
a housing having a first side to receive a display;
an input interface coupled to the housing, the input interface having an input area that defines a second side of the input interface; and
a pivot mount disposed between the first side of the housing and a third side of the input interface opposite the input area, wherein at least a portion of the input area is disposed over at least a portion of the pivot mount to maximize a surface area of the input area.

11. The mobile device of claim 10, wherein the pivot pin is configured to enable the input interface to swivel relative to the housing between a first position to reduce a viewing area of the display and a second position to increase the viewing area of the display, and wherein the third side of the input interface is orientated toward the first side of the housing when the input interface swivels between the first and second positions.

12. The mobile device of claim 10, wherein the display comprises a first touch-screen display and the input interface comprises a second touch-screen display, or
wherein the display comprises a touch-screen display and the input interface comprises a physical keypad.

13. The mobile device of claim 10, wherein the input area is to present one or more characters to facilitate input of information to the electronic device, or
wherein the input interface is capable of reorienting the one or more characters when the input interface is moved between the first and second positions.

14. A method for exposing a display of an electronic device, the method comprising:
providing a housing having a display, the display defining a first side of the housing;
pivotably coupling an input interface to the housing via a pivot mount to enable the input interface to swivel relative to the display between a first position to provide a first viewing area of the display and a second position to provide a second viewing area of the display, the first viewing area being smaller than the second viewing area, and wherein the input interface having an input area to define a second side of the input interface; and
orientating the input interface relative to the display such that a third side of the input interface opposite the input area faces the first side of the housing when the input interface moves between the first and second positions, and wherein the input area overlaps at least a portion of the pivot mount when the input interface is in one of the first and second positions.

15. The method of claim 14, further comprising using a pivot pin to pivotably couple the input interface relative to the housing and aligning the pivot pin relative to a first edge of the display and a second edge of the input interface at approximately a midpoint of each of the first and second edges.
